Europäisches Patentamt

European Patent Office

Office européen des brevets

(11) Veröffentlichungsnummer: **0 163 969**
**A 1**

(12) # EUROPÄISCHE PATENTANMELDUNG

(21) Anmeldenummer: **85105570.7**

(22) Anmeldetag: **07.05.85**

(51) Int. Cl.⁴: **H 05 B 39/09,** B 60 Q 1/00

(30) Priorität: **09.05.84 DE 3417194**

(43) Veröffentlichungstag der Anmeldung: **11.12.85**
**Patentblatt 85/50**

(84) Benannte Vertragsstaaten: **FR GB IT SE**

(71) Anmelder: **TRW Messmer GmbH & Co. KG,**
**Industriestrasse 2-8, D-7760 Radolfzell/Bodensee (DE)**

(72) Erfinder: **Schülzke, Peter, Dipl.-Ing.,**
**Kupferbergstrasse 12, D-7997 Immenstaad (DE)**

(74) Vertreter: **Eder, Eugen, Dipl.-Ing. et al, Patentanwälte**
**Dipl.-Ing. E. Eder Dipl.-Ing. K. Schieschke**
**Elisabethstrasse 34, D-8000 München 40 (DE)**

(54) **Schaltungsanordnung zur Steuerung der Leistung eines gleichstromgespeisten Verbrauchers, insbesondere für die Instrumentenbeleuchtung eines Kraftfahrzeuges.**

㉗ Die Schaltungsanordnung zur Steuerung der Leistung eines gleichstromgespeisten Verbrauchers, insbesondere für die Instrumentenbeleuchtung eines Kraftfahrzeuges, sieht vor, daß mit der Last L in Reihe ein mit einstellbarem Tastverhältnis arbeitender elektronischer Schalter ($B_1$, $B_2$) geschaltet ist. Der elektronische Schalter ist dabei als astabiler Multivibrator aufgebaut. Dieser besteht aus einem Komparator ($B_1$) und einem Leistungsverstärker ($B_2$).

ACTORUM AG

Schaltungsanordnung zur Steuerung der Leistung
eines gleichstromgespeisten Verbrauchers, insbesondere für die Instrumentenbeleuchtung eines
Kraftfahrzeuges

Die Erfindung betrifft eine Schaltungsanordnung zur Steuerung der Leistung eines gleichstromgespeisten Verbrauchers, insbesondere für die Instrumentenbeleuchtung eines Kraftfahrzeuges.

Die Instrumentenbeleuchtung in Kraftfahrzeugen ist in ihrer Helligkeit verstellbar. Es ist bekannt, hierfür einen veränderlichen Vorwiderstand (Reostat) zu verwenden. Nachteilig ist hierbei, daß der veränderliche Vorwiderstand eine beträchtliche Verlustleistung erzeugt, was zu Temperaturproblemen führt. Andererseits nimmt die Wattzahl der zu dimmenden Instrumentenbeleuchtung immer mehr zu, wodurch die Leistungs-Temperatur-Probleme verschärft werden.

Der Erfindung liegt die Aufgabe zugrunde, eine Schaltungsanordnung zur Steuerung der Leistung eines gleichstromgespeisten Verbrauchers, insbesondere für die Instrumentenbeleuchtung eines Kraftfahrzeuges, zu schaffen, die es ermöglicht, auch hohe Lasten mit geringer Verlustleistung zu steuern. Hierbei soll insbesondere bei Veränderung der Helligkeit einer Instrumentenbeleuchtung der Dimmgrad ca. 0 - 70 % betragen; es soll ein flackerfreies Dimmen, d.h. eine Schaltfrequenz gleich oder größer 50 Hz möglich sein; die Verlustleistung im Dimmer soll gering sein; die Herstellungskosten sollen niedrig sein; es soll ein geringer Platzbedarf erforderlich sein und schließlich sollen die geltenden Entstörnormen und speziell die Nahentstörnormen nach DIN/VDO 0879, Teil 3, erfüllt werden.

Die Erfindung löst diese Aufgabe mit den Merkmalen des die Erfindung kennzeichnenden Teils des Patentanspruches 1.

Die Erfindung bietet den Vorteil, mit verhältnismäßig einfachen Schaltungsanordnungen, insbesondere die sehr scharfen Nahentstörforderungen zu erfüllen und dabei zudem auch nur einen geringen Platzbedarf zu beanspruchen, wobei auch die Schaltungsanordnungen verhältnismäßig einfach aufgebaut sind.

Ausgestaltungen der Erfindung ergeben sich aus den Unteransprüchen.

Die Erfindung wird nachfolgend anhand von in der Zeichnung dargestellten Ausführungsbeispielen näher erläutert. In der Zeichnung zeigen:

Fig. 1     eine Prinzipschaltung eines Dimmers für eine Instrumentenbeleuchtung in einem Kraftfahrzeug;

Fig. 2     Impulsdiagramme zur Schaltung nach Fig. 1;

Fig. 3     eine ausgeführte Schaltung eines Dimmers nach Fig. 1;

Fig. 4     eine zu Fig. 3 komplementäre Schaltung, bei der die Last L einseitig fest an Fahrzeugmasse liegt und auch + zu schalten ist, und

Fig. 5     eine besonders vorteilhafte Schaltung eines Dimmers mit konstanter Schaltfrequenz.

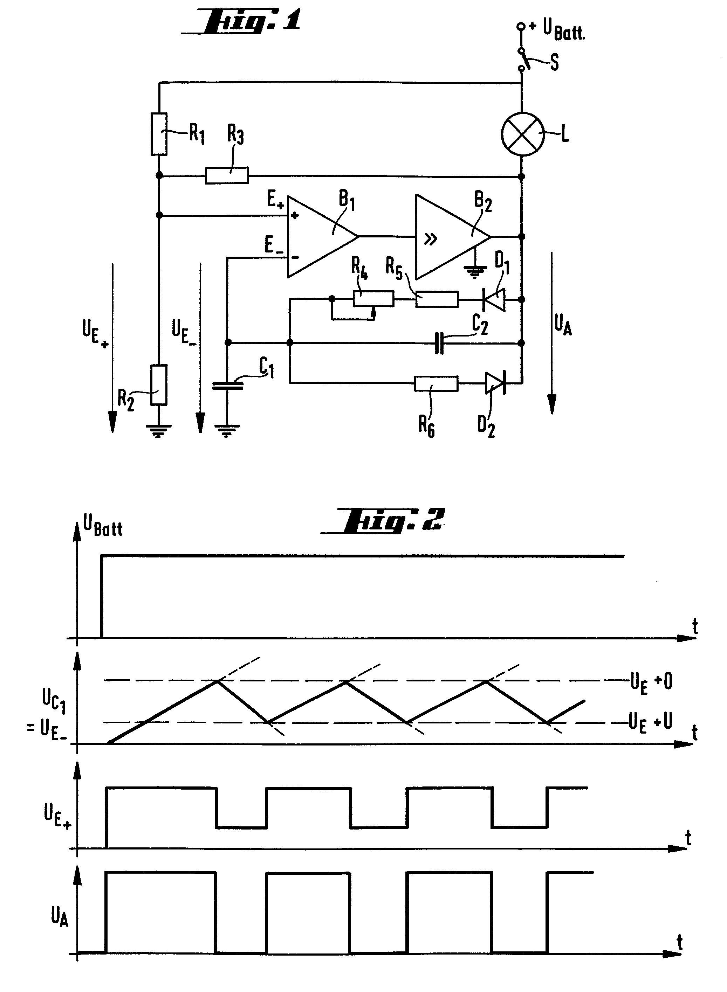

Bei der Prinzipschaltung nach Fig. 1 für einen Dimmer für die Instrumentenbeleuchtung eines Kraftfahrzeuges kann die Last L, z.B. die Instrumentenbeleuchtungslampen eines Kraftfahrzeuges, über den Lichtschalter S an den Pluspol der Fahrzeugbatterie angeschaltet werden. Der Ausgang der Last L ist über die Leistungsstufe $B_2$ an Fahrzeugmasse und damit an den Minuspol der Fahrzeugbatterie schaltbar.

Die Leistungsstufe $B_2$ ist über einen Komparator $B_1$ steuerbar. Komparator $B_1$ und Leistungstufe $B_2$ bilden zusammen mit dem Netzwerk einen astabilen Multivibrator.

Wird an die Schaltung die Batteriespannung $U_{Batt}$ durch Schließen des Schalters S angelegt und ist der Kondensator $C_1$, der an den Minuseingang des Komparators $B_1$ angeschlossen und mit Fahrzeugmasse verbunden ist, entladen, so geht der Ausgang des Komparators $B_1$ auf "High".

Der Pluseingang des Komparators $B_1$ ist über einen Widerstand $R_2$ an Fahrzeugmasse gelegt und zugleich über den Widerstand $R_1$ an die + Batteriespannung angeschaltet. $R_1$ und $R_2$ bilden dabei einen Spannungsteiler. Zugleich ist der Pluseingang des Komparators $B_1$ über den Widerstand $R_3$ mit dem Ausgang der Last L verbunden.

Der Minuseingang des Komparators $B_1$ ist über ein Netzwerk mit dem Ausgang der Last L und auch dem Ausgang der Leistungsstufe $B_2$ verbunden.

Der eine Zweig des Netzwerkes besteht aus der Reihenschaltung eines veränderbaren Widerstandes $R_4$, eines Festwiderstandes $R_5$ und einer Diode $D_1$.

Parallel zu diesem Netzwerkzweig liegt ein Kondensator $C_2$ sowie eine Reihenschaltung eines Festwiderstandes $R_6$ und einer Diode $D_2$.

Bei Anlegen der Batteriespannung $U_{Batt}$ und bei auf "High" befindlichem Komparatorausgang wird über den Widerstand $R_3$ die obere Schwellspannung

$$U_E + 0 \sim R_2 \frac{\frac{R_2 + R_1 \cdot R_3}{R_1 + R_3}}{} \cdot U_{Batt}$$

an den nicht invertierenden Eingang E+ des Komparators $B_1$ angelegt.

Gleichzeitig beginnt sich $C_1$ über $D_1$, $R_5$, $R_4$ aufzuladen. Erreicht $U_{C_1} = U_E$ die obere Schwelle $U_E + 0$, schaltet der Ausgang des Komparators $B_1$ auf "Low". Ebenso geht der Ausgang der Leistungsstufe $B_2$ auf "Low". Über $R_3$ wird $U_E +$ auf die untere Schwellspannung

$$U_E + U = \frac{\frac{R_2 \cdot R_3}{R_2 + R_3}}{R_1 + \frac{R_2 \cdot R_3}{R_2 + R_3}} \cdot U_{Batt}$$

umgeschaltet, wobei dieser Zustand zunächst erhalten bleibt.

Der Pfad $D_1$, $R_5$, $R_4$ wird gesperrt, jedoch über $D_2$, $R_6$ entlädt sich der Kondensator $C_1$ zur Fahrzeugmasse und damit gegen Minus der Fahrzeugbatterie.

Sobald $U_{C_1} = U_{E-}$ die untere Schwelle $U_E + U$ erreicht, kippt die Schaltung wieder in den schon beschriebenen Zustand zurück, d.h. der Ausgang des Komparators $B_1$ geht auf "High" und der Kondensator $C_1$ beginnt sich aufzuladen.

Mit dem Komparator $B_1$ kann durch Mitkopplung vom Ausgang
der Leistungstufe $B_2$ auf den Spannungsteiler $R_1$, $R_2$ an E+
und gleichzeitiger Gegenkopplung über $D_1$, $R_4$, $R_5$ und $D_2$,
$R_6$ auf den Kondensator $C_1$ an E- mit sehr wenigen Bauelementen eine astabile Schaltung realisiert werden.

Dabei erlaubt die Gestaltung der Gegenkopplung durch $D_1$,
$R_4$, $R_5$, $D_2$, $R_6$ die Realisierung von Tastverhältnissen von
nahe Null bis nahe 1. Durch Ausbildung von $R_4$ als Potentiometer ist dieses Tastverhältnis auch kontinuierlich durchsteuerbar. Es ist

$$T_{ein} (U_A \sim 0) = K \cdot C_1 \cdot R_6$$

$$T_{aus} (U_A \sim U_{Batt}) = K \cdot C_1 \cdot (R_{4eff.} + R_5)$$

$$TV = \frac{T_{ein}}{T_{ein} + T_{aus}}$$

$$TV = \frac{K \cdot C_1 \cdot R_6}{K \cdot C_1 R_6 + K \cdot C_1 (R_{4eff} + R_5)}$$

$$= \frac{R_6}{R_6 + R_{4eff} + R_5}$$

mit $R_4 \ll R_6$ und $R_5 \ll R_6$ erhält man:

$$TV\ max. \sim 1$$

mit $R_4 \gg R_6$ erhält man:

$$TV\ min. \sim 0$$

Der Kondensator $C_2$ liegt im Gegenkopplungszweig der Schaltung und stellt eine lediglich dynamisch wirkende Gegenkopplung dar. Die Schaltung ohne $C_2$ würde steile Ein/Aus-Flanken entsprechend den Schaltzeiten des Komparators $B_1$ erzeugen. Bei der endlichen Impedanz des Kraftfahrzeug-Bordnetzes würde das zu nicht akzeptablen Nahstörungen führen.

Je größer nun $D_2$ gewählt wird, desto flacher sind die Ein/Aus-Flanken am Lastausgang. Verlangsamt man z.B. die Ein/Aus-Schaltzeiten auf ca. 30µs, erreicht man nach DIN/VDO 0879, Teil 3, bereits relativ gute Entstörgrade für LW/MW und die beste Entstör-Klasse für KW/UKW. Andererseits ist die dadurch bewirkte Verlustleistungserhöhung noch relativ gering gegen die statisch anfallende Verlustleistung bei einer ökonomischen Darlington-Schaltung. Bei einer Schaltfrequenz von z.B. 50 hz ($\hat{=}$T=20ms) treten die zusätzlichen Schaltverluste dann nur mit einem Tastverhältnis von 2x30 µs/20ms ∼ 3‰ in Erscheinung. Die gestellten Forderungen nach Ausgangslast, Dimmgrad, Schaltfrequenz, niederen Kosten und geringem Platzbedarf und Nahentstörung sind mit dem aufgezeigten Schaltprinzip zu erfüllen.

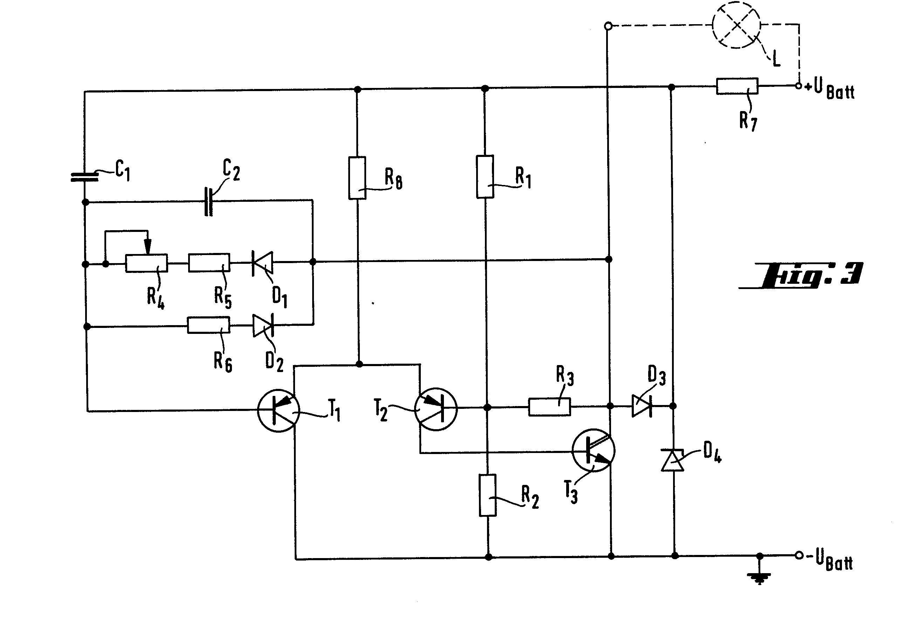

Der Verlauf der Spannungen $U_{Batt}$, $U_{E^-}$, $U_{E^+}$ und $U_A$ über die Zeit ergibt sich aus den in Fig. 2 untereinander gezeichneten Diagrammen.

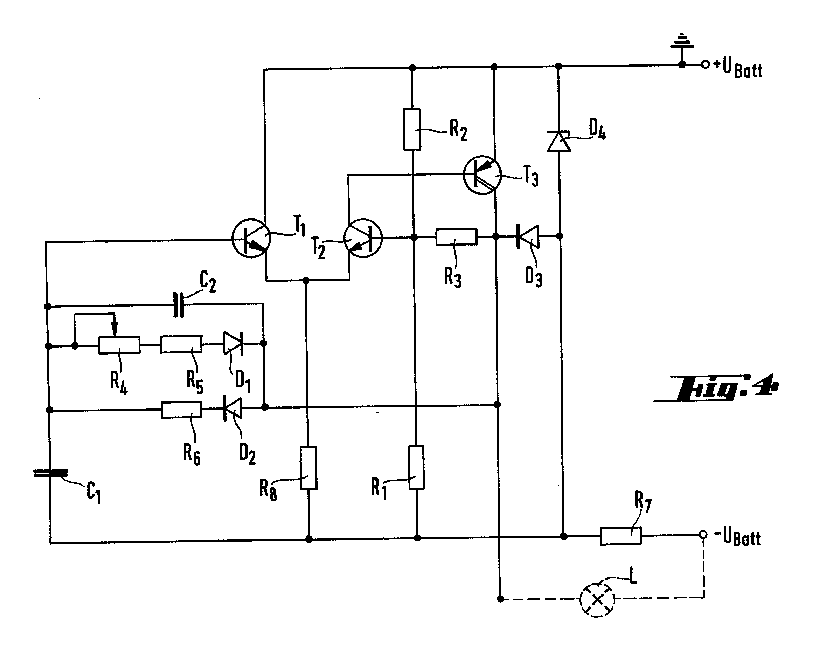

Bei der in Fig. 3 gezeigten, ausgeführten Schaltung ist der Komparator $B_1$ durch einen Differenzverstärker mit den Transistoren $T_1$ und $T_2$ sowie die Leistungsstufe durch einen Leistungs-Darlington-Transistor $T_3$ realisiert. Die über den Vorwiderstand $R_7$ zugeführte + Batteriespannung wird über einen weiteren Vorwiderstand $R_8$ dem jeweiligen Emitter der Transistoren $T_1$ bzw. $T_2$ zugeleitet. Zudem ist an den

Darlington-Transistor $T_3$ eine Diode 3 und eine Zehnerdiode $D_4$ angeschaltet.

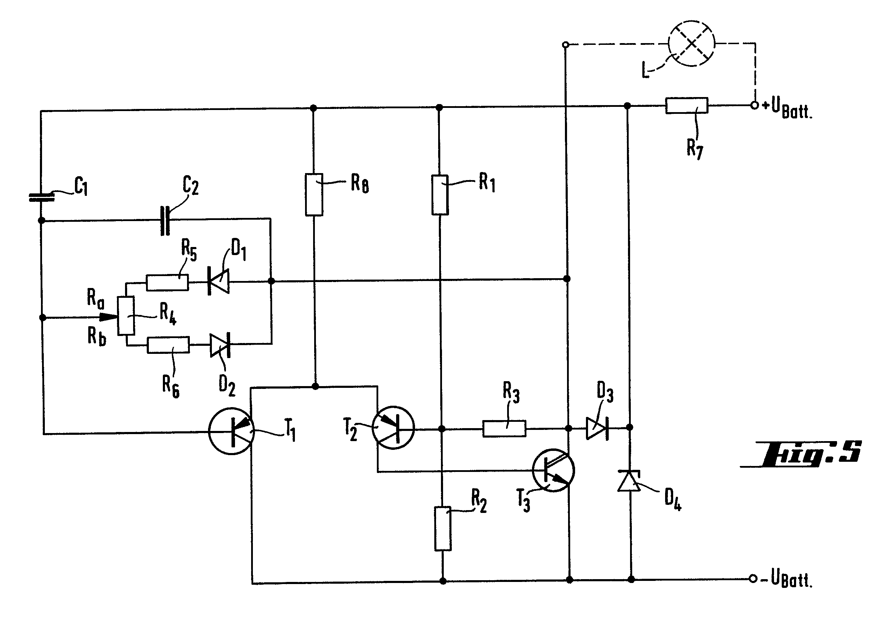

Die Fig. 4 zeigt eine zu Fig. 3 komplementär ausgeführte Schaltung.

Die Fig. 5 zeigt eine Schaltung für eine konstante Schaltfrequenz.

Im Unterschied zu Fig. 3 ist das Potentiometer $R_4$ mit $R_a$ in den Zweig $D_1$, $R_5$ und mit $R_b$ in den Zweig $D_2$, $R_6$ ($R_a$ + $R_b$ = $R_4$) gelegt.

Es ist somit:

$$T_{ein} = K \cdot C_1 \cdot (R_b + R_3)$$

$$T_{aus} = K \cdot C_1 \cdot (R_a + R_2)$$

$$T = T_{ein} + T_{aus} = K \cdot C_1 \cdot (R_a+R_b+R_2+R_3)$$
$$= K \cdot C_1 \cdot (R_4+R_5+R_6) = const.$$

d.h. die Schaltfrequenz ist konstant, da sich bei Verstellung des Potentiometers $R_4$ = $R_a$+$R_b$ $T_{ein}$ und entsprechend gegensinnig auch $T_{aus}$ ändert.

Das ist besonders vorteilhaft, um die Schaltfrequenz auf den niederstmöglichen Wert für flackerfrei gedimmtes Licht von 50 hz zu legen. Damit erhält man das niederstmögliche (und konstante) Tastverhältnis für die vorstehenderwähnten Schaltverluste wegen der Flankenverlangsamung.

Selbstverständlich können die beschriebenen Schaltungen anstatt für Instrumentenbeleuchtungslampen von Kraftfahrzeugen auch für andere gleichstromgespeiste Lasten eingesetzt werden.

Patentansprüche

1. Schaltungsanordnung zur Steuerung der Leistung eines gleichstromgespeisten Verbrauchers, insbesondere für die Instrumentenbeleuchtung eines Kraftfahrzeuges, dadurch gekennzeichnet, daß mit der Last (L) in Reihe ein mit einstellbarem Tastverhältnis arbeitender elektronischer Schalter ($B_1$, $B_2$) geschaltet ist.

2. Schaltungsanordnung nach Anspruch 1, dadurch gekennzeichnet, daß der elektronische Schalter ($B_1$, $B_2$) als astabiler Multivibrator aufgebaut ist.

3. Schaltungsanordnung nach den Ansprüchen 1 und 2, dadurch gekennzeichnet, daß der astabile Multivibrator aus einem Komparator ($B_1$) und einem Leistungsverstärker ($B_2$) besteht, daß der positive Eingang (+) des Komparators an dem Mittelanschluß eines Spannungsteilers ($R_1$, $R_2$) angeschlossen ist, der über einen Widerstand ($R_3$) mit dem Ausgang der Last (L) verbunden ist, daß der Eingang der Last und der Spannungsteiler an den einen Pol (+) der Fahrzeugbatterie anschließbar sind, daß der negative Eingang (-) des Komparators über einen Kondensator ($C_1$) an den anderen Pol (-) der Fahrzeugbatterie angeschlossen und über ein Mitkopplungs- und Gegenkopplungsnetzwerk mit dem Ausgang des Leistungsverstärkers ($B_2$) verbunden ist, an dem auch der Ausgang der Last angeschlossen ist.

4. Schaltungsanordnung nach Anspruch 3, dadurch gekennzeichnet, daß Mitkopplungs- und Gegenkopplungsnetzwerk aus einem Zweig einer Reihenschaltung eines veränderlichen Widerstandes ($R_4$), eines Festwiderstandes ($R_5$) und einer

- 9 -

0163969

Diode ($D_1$), eines dazu parallelen Zweiges mit einem Kondensátor ($C_2$) und einem weiteren dazu parallelen Zweig mit der Reihenschaltung eines Festwiderstandes ($R_6$) und einer gegenüber der Diode ($D_1$) entgegengerichteten Diode ($D_2$) besteht.

5. Schaltungsanordnung nach den Ansprüchen 1 bis 4, dadurch gekennzeichnet, daß der Komparator ($B_1$) von zwei als Differenzverstärker geschalteten Transistoren ($T_1$, $T_2$) und der Leistungsverstärker von einem Leistungs-Darlington-Transistor ($T_3$) gebildet ist.

6. Schaltungsanordnung nach Anspruch 4, dadurch gekennzeichnet, daß der veränderbare Widerstand ($R_4$) an beide Zweige mit den Dioden ($D_1$, $D_2$) angeschlossen und der Schleifer dieses veränderbaren Widerstandes mit dem einen Anschluß des Kondensators ($C_2$) im anderen Zweig des Mitkopplungs-Gegenkopplungsnetzwerkes verbunden ist.

0163969

Fig. 1

Fig. 2

Fig. 3

C1 C2 R8 R1 L +U_Batt R7 R4 R5 D1 R6 D2 T1 T2 R3 D3 T3 R2 D4 -U_Batt

0163969

Fig. 4

Fig. 5

4/4

0163969

| | EINSCHLÄGIGE DOKUMENTE | | EP 85105570.7 | |
|---|---|---|---|---|
| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) | |
| X | DE - A - 2 333 287 (SPERRY RAND)  <br> * Gesamt *  <br> -- | 1,2 | H 05 B 39/09  <br> B 60 Q 1/00 | |
| A | DE - B2 - 2 420 196 (NEUMANN)  <br> * Gesamt *  <br> -- | 1-6 | | |
| A | US - A - 4 097 782 (CHAMBLISS)  <br> * Zusammenfassung; Fig. 4 *  <br> -- | 1,2 | | |
| A | DE - A - 2 258 314 (BONNELLA)  <br> * Fig. 1 *  <br> ---- | 1 | RECHERCHIERTE SACHGEBIETE (Int. Cl.4)  <br><br> H 05 B 39/00  <br> H 05 B 37/00  <br> B 60 Q 1/00 | |

Der vorliegende Recherchenbericht wurde für alle Patentansprüche erstellt.

| Recherchenort | Abschlußdatum der Recherche | Prüfer |
|---|---|---|
| WIEN | 26-07-1985 | VAKIL |